# EUROPÄISCHE PATENTSCHRIFT

(11) **EP 0 822 389 B1**
(45) Veröffentlichungstag und Bekanntmachung des Hinweises auf die Patenterteilung: **16.04.2003**
(21) Anmeldenummer: 97109160.8
(22) Anmeldetag: 06.06.1997
(51) Int. Cl.: G01B 11/24

(54) **Verfahren und Vorrichtung zur Kantenverfolgung und Kantenprüfung**
Procedure and device to determine and to verify the contour of a rim
Procédé et dispositif pour déterminer et pour vérifier le contour d'un rebord

(30) Priorität: 29.07.1996 CH 188296
(43) Veröffentlichungstag der Anmeldung: 04.02.1998
(60) Teilanmeldung: 02011396.5
(73) Patentinhaber: ELPATRONIC AG, 8962 Bergdietikon (CH)
(72) Erfinder: Wildmann, Daniel, Dr., 8157 Dielsdorf (CH); Buchmann, Christa, 8424 Embrach (CH)

(56) Entgegenhaltungen:
- EP-A- 0 532 257
- EP-A- 0 563 829
- US-A- 4 491 719
- PATENT ABSTRACTS OF JAPAN vol. 012, no. 201 (M-707), 10. Juni 1988 (1988-06-10) & JP 63 005880 A (KOBE STEEL LTD), 11. Januar 1988 (1988-01-11)
- PATENT ABSTRACTS OF JAPAN vol. 018, no. 293 (P-1747), 3. Juni 1994 (1994-06-03) & JP 06 058726 A (MITSUBISHI HEAVY IND LTD), 4. März 1994 (1994-03-04)

## Beschreibung

Die Erfindung betrifft ein Verfahren gemäss Oberbegriff des Anspruchs 1 bzw. eine Vorrichtung gemäss Oberbegriff des Anspruchs 9.

Es ist bekannt, Bleche durch Schweissung zu grösseren Bauteilen (sogenannte tailored blanks) zu verschweissen, welche anschliessend einem Umformungsprozess unterworfen werden. Ein Anwendungsgebiet von solchen "tailored blanks" liegt z.B. in der Automobilindustrie. Die Verschweissung der Bleche kann durch Quetschnahtschweissen und Laserschweissen erfolgen. Da die Schweissnaht zusammen mit den Blechen dem Umformungsprozess unterworfen ist, ist eine einwandfreie Qualität der gesamten Naht wesentlich. Die zu verschweissenden Bleche werden mit ihren gemeinsamen Kanten aneinanderliegend der Schweissstelle zugeführt, wobei es wichtig ist, dass der fokussierte Laserstrahl möglichst genau der gemeinsamen Kante der aneinanderliegenden Bleche folgt. Zu diesem Zweck werden Einrichtungen eingesetzt, die den genauen Kantenverlauf vor der Schweisszone ermitteln, wodurch der Laserstrahl bei der Schweissung entsprechend geführt werden kann. Eine bekannte Einrichtung projiziert zu diesem Zweck ein Linienmuster konstanter Intensität quer über die Kante, welches Muster von einer Kamera aufgenommen wird, deren Bild von einem Rechner ausgewertet wird, um aus dem Verlauf mindestens einer der Linien auf den Verlauf der Kante bzw. des Spaltes zwischen den Blechen an diesem Ort zu schliessen. Auf diese Weise werden die Kante und der Spalt entlang seiner ganzen Länge, vor der Schweisszone verfolgt und der Laserstrahl zur Schweissung entsprechend gesteuert. US-A-4,491,719 zeigt eine solche Einrichtung.

Nach der Schweisszone kann auf ähnliche Weise das Profil der Schweissnaht ermittelt werden, wodurch Schweissfehler erkannt werden können.

Sowohl bei der Kantenverfolgung vor der Schweissung als insbesondere auch bei der Kantenprüfung bzw. Schweissnahtprüfung nach der Schweissung, stellt sich das Problem, dass die Reflektivität der Bleche sehr unterschiedlich ist. Die einzelnen Bleche können mit verschiedenen Oberflächenbeschichtungen versehen sein, einen Ölfilm aufweisen oder nicht, glänzend oder nichtglänzend sein, Schmauchspuren aufweisen usw. Die dadurch hervorgerufenen grossen Helligkeitsunterschiede können den Dynamikbereich der eingesetzten Kameras übersteigen, wodurch die Linien zu hell oder zu dunkel abgebildet werden, was die Bildauswertung erschweren oder allenfalls sogar verunmöglichen kann. Dadurch kann im Fall der Kantenverfolgung die Schweissgeschwindigkeit leiden oder es können Schweissfehler entstehen; im Fall der Kantenprüfung können Fehler evtl. nur schwer erkannt werden oder Fehler werden angenommen, wo keine vorhanden sind.

Der Erfindung liegt deshalb die Aufgabe zugrunde, das Verfahren der eingangs genannten Art bzw. die Vorrichtung der eingangs genannten Art so zu verbessern, dass die Auswertung des aufgenommenen Bildes auch unter schlechten Bedingungen ohne Probleme möglich ist.

Dies wird gemäss einem ersten Ausführungsbeispiel der Erfindung mit den kennzeichnenden Merkmalen des Anspruchs 1 bzw. des Anspruchs 9 erreicht. Dadurch, dass Linien unterschiedlicher Helligkeit auf die Bleche projiziert werden, ergibt sich eine bessere Auswertbarkeit des Bildes. Auf glänzendem, stark reflektierendem Blech kann die Auswerteinrichtung eine korrekt abgebildete Linie geringer Intensität zur Auswertung verwenden und die überstrahlenden Linien höherer Intensität nicht berücksichtigen. Auf dunklem, schlecht reflektierendem Blech kann die Linie mit grösster Intensität gute Resultate ergeben. Auf diese Weise kann auf einfache Art ein sehr gutes Resultat der Kantenverfolgung bzw. der Kantenprüfung erzielt werden.

Die Lichtintensität einzelner Linien kann untereinander z.B. zwischen 15% und 100% unterschiedlich sein, wobei auch Linien mit gleicher Intensität vorgesehen sein können. Bei einem bevorzugten Beispiel sind fünf Linien von 25% (2 Linien), 50% (2 Linien) und 100% (1 Linie) Intensität vorgesehen.

Bei einer Ausführungsform wird bei jeder Bildauswertung festgestellt, ob die Helligkeit der Linien in einem vorgegebenen Rahmen liegt und wenn nicht, so wird ein Steuersignal erzeugt, welches für die nächste Bildaufnahme die Belichtungskontrolle der Aufnahmeeinrichtung beeinflusst, so dass das nächste Bild heller oder dunkler wird. zusätzlich zur Erzeugung von Linien unterschiedlicher Helligkeit erfolgt also eine Belichtungskontrolle bzw. Belichtungsbeeinflussung der Kamera, aufgrund des Resultates des aufgenommenen Bildes.

Bei einer weiteren Ausführungsform wird ferner die Helligkeit bzw. die Intensität des Projektors generell geändert, wodurch ebenfalls die Reflektivität unterschiedlicher Bleche kompensiert werden kann.

Im folgenden werden Ausführungsbeispiele der Erfindung anhand der Figuren näher erläutert. Dabei zeigt
Figur 1 schematisch eine grundsätzliche Anordnung von Linienprojektor und Kamera und
Figur 2 eine schematische Darstellung mit einer Vorrichtung zur Kantenverfolgung und zwei Vorrichtungen zur Kanten- bzw. Schweissnahtprüfung.

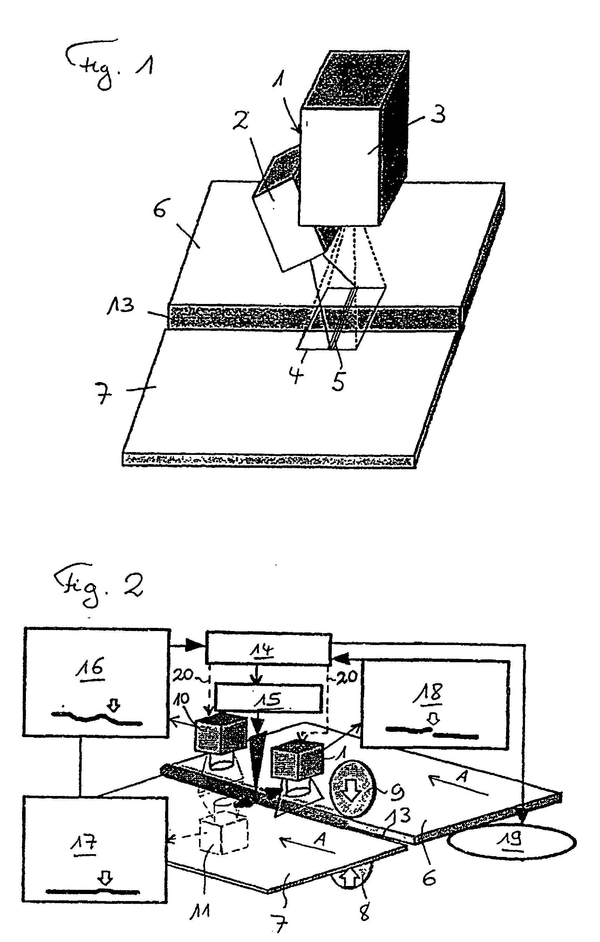

In Figur 1 sind 2 Bleche 6 und 7 gezeigt, welche aneinander anliegen und eine gemeinsame Kante 13 aufweisen. Diese Bleche werden entlang der Kante 13 z.B. durch Laserschweissung miteinander verbunden. Zur Verfolgung des Kantenverlaufs bzw. zur Prüfung der Schweissnaht ist es bekannt, mehrere Linien 5 aus Licht quer zur Kante 13 auf diese und den benachbarten Bereich der beiden Bleche zu projizieren. In dem gezeigten Beispiel sind lediglich 3 Linien dargestellt, es könnte sich aber auch um eine andere Anzahl Linien handeln. Die Linien verlaufen im 90°-Winkel oder schräg zur'Kante 13 und befinden sich innerhalb des Erfassungsbereiches einer Aufnahmeeinrichtung 3, welche insbesondere von einer CCD-Kamera gebildet sein kann. Der Projektor 2 für die Projektion der Linien 5 wird vorzugsweise von einer Laserlichtquelle gebildet, hinter welcher ein Beugungsgitter angeordnet ist, das die Linien 5 als Beugungslinien erzeugt. Das von der Kamera 3 erfasste Bild wird in einer Bildauswerte-Einrichtung ausgewertet, um mittels des Verlaufs mindestens einer der Linien 5 den Verlauf des Spaltes zwischen den Blechen 6 und 7 entlang der Kante 13 zu bestimmen, bzw. um nach der Verschweissung der Bleche den Verlauf der Schweissnaht zu bestimmen. Figur 2 zeigt eine solche Vorrichtung, bei welcher mehrere Anordnungen gemäss Figur 1 vorgesehen sind, nämlich eine Anordnung 1 vor der Schweisszone und 2 Anordnungen 10 und 11 nach der Schweisszone. In Figur 2 ist ersichtlich, dass die Bleche 6 und 7, welche z.B. in Schweissrichtung eine Länge von 2 m aufweisen können, durch eine nicht gezeigte Fördereinrichtung in Richtung der Pfeile A in zueinander genau fixierter Stellung durch die Vorrichtung gefördert werden. Vor der Kantenverfolgungsvorrichtung 1 kann eine Umformungseinrichtung mit den Rollen 8 und 9 vorgesehen sein, welche durch verformen des dickeren Bleches 6 den zwischen den Blechen bestehenden Spalt möglichst verkleinert. Der genaue Verlauf des Spaltes wird dann durch die Kantenverfolgungseinrichtung 1 festgestellt, indem diese, wie bereits beschrieben, ein Linienmuster quer zur Kante 13 über diese projiziert und mittels einer Kamera das Linienmuster erfasst und ausgewertet wird. Durch die Projektionseinrichtung können z.B. fünf parallel verlaufende Linien über die Kante projiziert werden. Das Bild aus der Kamera der Anordnung 1 gelangt zu einer Auswerteinrichtung 18, welche den genauen Verlauf des Spaltes bestimmt. Von der Auswerteinrichtung 18 gehen Steuersignale an eine Steuereinrichtung 14, welche ihrerseits die Laserlichtquelle 15 so steuert, dass der nur schematisch dargestellte Laserlichtstrahl zur Verschweissung der Bleche 6 und 7 genau dem Verlauf des Spaltes entlang der Kante 13 folgt. Nach der Schweisszone, d.h. in Förderrichtung, hinter dem Laserstrahl ist eine Anordnung 10 gemäss derjenigen von Figur 1 oberhalb der Schweissnaht angeordnet und eine Anordnung 11 gemäss derjenigen von Figur 1 unterhalb der Bleche. Diese beiden Anordnungen projizieren ebenfalls Linien quer zur Kante 13 bzw. zur Schweissnaht. Aus dem Bild der Linien können die Auswerteinrichtungen 16 bzw. 17 den Verlauf der Schweissnaht bestimmen und damit eine Schweissnahtkontrolle auf verschiedene Arten von Fehlern hin durchführen, was an sich bekannt ist und hier nicht näher beschrieben wird. Die Auswerteinrichtungen 16 und 17 geben ein entsprechendes Signal an die Steuereinrichtung 14 ab und diese kann an eine übergeordnete Steuerung 19 ein Signal abgeben, ob die aus den Blechen 6 und 7 zusammengeschweisste Platine den Qualitätsanforderungen genügt oder nicht.

Gemäss der vorliegenden Erfindung werden nun die Linien 5 derart projiziert, dass verschiedene Linien verschiedene Lichtintensitäten aufweisen. So könnte z.B. von den drei Linien gemäss Figur 1 die hellste Linie eine Lichtintensität von 100 % aufweisen, eine zweite Linie eine Lichtintensität von 60 % und eine dritte Linie eine Lichtintensität von 30%. Bevorzugt wird ein Ausführungsbeispiel, bei welchem fünf Linien als Beugungslinien projiziert werden. Die mittlere Beugungslinie null-ter Ordnung weist bei dieser Ausführungsform z.B. die Intensität von 100% auf. Die beidseits davon liegenden Beugungslinien erster Ordnung weisen jeweils eine Intensität auf von 50% auf und die beidseits weiter aussen liegenden Beugungslinien zweiter Ordnung weisen je eine Lichtintensität von 25% auf. Linienprojektoren mit Lasern und Beugungsgittern, welche die genannten Anforderungen erfüllen können, werden z.B. von der Firma LASIRIS INCORPORATED in 3549 Ashby, Quebec, CANADA, hergestellt.

Durch die verschiedenen Lichtintensitäten der Linien 5 wird durch die Kamera 3 ein Bild aufgenommen, welches auch bei entlang der Kante 13 unterschiedlichen Reflektivitäten der Blechoberflächen, eine gute Erkennbarkeit mindestens einer der Linien ergibt, und nach Auswahl derselben durch die Auswerteinrichtung eine gute Bildauswertung ermöglicht. Auf diese Weise kann der Verlauf des Spaltes bzw. der Verlauf der Schweissnaht auch bei schwierigen Reflektionsverhältnissen auf der Blechoberfläche genau festgestellt werden.

Gemäss einer bevorzugten Ausführungsform der Erfindung wird an die jeweilige Kamera ein Belichtungssteuer-Signal 20 abgegeben, welches in Figur 2 von der Steuereinrichtung 14 abgegeben wird, welches aber auch direkt von der jeweiligen Auswerteinrichtung 18 bzw. 16 oder 17 an die Kamera abgegeben werden könnte. Das Steuersignal 20 beinhaltet die Information, das die Kamera 3 bei der Aufnahme des nächsten Bildes eine längere oder kürzere oder die gleiche Belichtungszeit wählen soll, als beim vorhergehenden Bild. Bei einer CCD-Kamera kann das Steuersignal anstelle der Belichtungszeit die Integrationszeit des CCD-Elementes bestimmen. Aufgrund der Information, ob das vorhergehende Bild der Linien 5 zu dunkel oder zu hell gewesen ist, wird also die Belichtung der jeweiligen Kamera für das nächste Bild beeinflusst. Es ergibt sich auch durch diesen Aspekt der Verbindung eine Verbesserung der Erkennung der projizierten Linien im aufgenommenen Bild. Vorzugsweise wird immer über die gleiche Kanten- bzw. Nahtlänge integriert, unabhängig von der Schweissgeschwindigkeit.

Es werden also einerseits Linien mit verschiedener Intensität quer zur Kante 13 projiziert, und zusätzlich wird eine Belichtungsbeeinflussung der jeweiligen Kamera vorgesehen. Entsprechende Kameras, insbesondere CCD-Kameras sind handelsüblich und brauchen hier nicht näher erläutert zu werden.

Gemäss einer weiteren Ausführungsform der Erfindung kann die Gesamthelligkeit der projizierten Linien gesteuert werden. In diesem Fall wird also nicht die Belichtungszeit der Kamera oder die Integrationszeit des CCD-Elementes durch ein Signal aus der Auswerteinrichtung beeinflusst, sondern die Helligkeit des Linienprojektors. So wird die Helligkeit eines Linienprojektors gesteuert, der Linien unterschiedlicher Intensität erzeugt, wie dies vorstehend beschrieben worden ist. Die Steuerung der Helligkeit kann auch mit der Belichtungszeitsteuerung oder der Integrationszeitsteuerung kombiniert werden, wobei die steuernde Einrichtung in diesem Fall zwei Steuersignale, eines für den Projektor und eines für die Kamera abgibt.

Die Erfindung und die beiden speziellen Ausführungen können wie folgt dargestellt werden:

| | **Maasnahme** | **Wirkung** |
|---|---|---|
| 1. | Unterschiedliche Intensität der Linien des Linienprojektors. | Lokale Unterschiede der Reflektivität quer zur Kante bzw. Schweissnaht können kompensiert werden. |
| | | |
| 2. | Integrationszeit oder Verschlusszeit des Kamera-CCD-Elementes ändern (vorzugsweise so, dass immer über dieselbe Kanten- bzw. Nahtlänge integriert wird). | Belichtungsanpassung und damit immer gleiche Helligkeit des Bildes, vorzugsweise mit immer gleichbleibender Auflösung, unabhängig von der Schweissgeschwindigeit. |
| | | |
| 3. | Regeln der Grundintensität des Linienprojektors. | Gleiche Helligkeit des gestreuten und reflektierten Lichtes unabhängig vom generellen Reflexionsverhaltens des Bleches. |

## Patentansprüche

1. Verfahren zur Kantenverfolgung vor dem Schweissen und/oder zur Kanten- respektive Schweissnahtprüfung nach dem Schweissen bei der Schweissverbindung von Blechen (6,7) entlang einer gemeinsamen Kante (13), wobei Licht in der Form von einem Linienmuster mit mehreren quer über die Kante verlaufenden Linien (5) auf die Bleche (6,7) projiziert wird und das von einer Kamera (3) aufgenommene Bild des Linienmusters ausgewertet wird, **dadurch gekennzeichnet, dass** die Linien (5) des Linienmusters mit voneinander verschiedener Lichtintensität projiziert werden.

2. Verfahren nach Anspruch 1, **dadurch gekennzeichnet, dass** die Linien Lichtintensitäten im Bereich von 100 % bis 5 % aufweisen.

3. Verfahren nach Anspruch 1 oder 2, **dadurch gekennzeichnet, dass** zusätzlich Linien mit gleicher Intensität projiziert werden.

4. Verfahren nach Anspruch 3, **dadurch gekennzeichnet, dass** fünf Linien projiziert werden, wobei eine Linie eine Intensität von 100 %, zwei Linien eine Intensität von 50 % und zwei Linien eine Intensität von 25 % aufwiesen.

5. Verfahren nach Anspruch 4, **dadurch gekennzeichnet, dass** die fünf Linien durch ein Beugungsgitter erzeugt werden, wobei die in der Mitte liegende Linie der 0. Beugungsordnung 100 % Intensität aufweist, die beidseits davon liegenden Linien der 1. Beugungsordnung 50% Intensität aufweisen und die äusseren Linien der 2. Beugungsordnung 25 % Intensität aufweisen.

6. Verfahren nach einem der Ansprüche 1 bis 5, **dadurch gekennzeichnet, dass** zur Auswertung eine Auswerteinheit (14) vorgesehen ist, die eine steuerbare variable Belichtungskontrolle aufweist, und dass bei der Bildauswertung eines Bildes jeweils festgestellt wird ob die Belichtung für das nächste Bild zu ändern ist und dass ein Steuersignal zur Belichtungsbeeinflussung an die Kamera abgegeben wird.

7. Verfahren nach Anspruch 6, **dadurch gekennzeichnet, dass** eine CCD-Kamera eingesetzt wird, und dass zur Belichtungskontrolle die Integrationszeit des CCD-Elementes oder die Verschlusszeit des Kameraverschlusses verändert wird, wobei vorzugsweise jeweils über eine konstante, wählbare Kanten- bzw. Nahtlänge integriert wird.

8. Verfahren nach einem der Ansprüche 1 bis 7, **dadurch gekennzeichnet, dass** der Projektor für die Linien in seiner Lichtintensität steuerbar ist, und dass bei der Bildauswertung eines Bildes jeweils festgestellt wird, ob die Helligkeit der Linien für das nächste Bild zu ändern ist und wenn ja, dass ein Steuersignal zur Intensitätsbeeinflussung an den Projektor abgegeben wird.

9. Vorrichtung zur Kantenverfolgung vor dem Schweissen und/oder zur Kanten- respektive Schweissnahtprüfung nach dem Schweissen bei der Schweissverbindung von Blechen (6,7) entlang einer gemeinsamen Kante (13), umfassend eine Einrichtung (2) zur Erzeugung eines Linienmusters mit mehreren quer über die Kante verlaufenden Linien aus Licht, einer Aufnahmeeinrichtung (3) zur Aufnahme eines Bildes des Linienmusters und einer Auswerteinrichtung (14) zur Auswertung des Bildes, **dadurch gekennzeichnet, dass** die Einrichtung (2) zur Erzeugung des Linienmusters zur Erzeugung von einem Linienmuster mit Linien verschiedener Intensität und die Auswerteinrichtung (14) zur Auswahl von Linien aufgrund der Helligkeit der gestreuten oder reflektierten Strahlung ausgestaltet ist.

10. Vorrichtung nach Anspruch 9, **dadurch gekennzeichnet, dass** die Einrichtung zur Linienmustererzeugung eine Laserlichtquelle und ein Beugungsgitter umfasst.

11. Vorrichtung nach Anspruch 10, **dadurch gekennzeichnet, dass** die Einrichtung zur Erzeugung von fünf Beugungslinien ausgestaltet ist, wobei die Beugungslinie 0. Ordnung eine Intensität von 100 %, die Beugungslinien 1. Ordnung eine Intensität von ca. 50 % und die Beugungslinien 2. Ordnung eine Intensität von ca. 25 % aufweisen.

12. Vorrichtung nach Anspruch 9, **dadurch gekennzeichnet, dass** die Aufnahmeeinrichtung mindestens eine CCD-Kamera aufweist.

13. Vorrichtung nach einem der Ansprüche 9 bis 12, **dadurch gekennzeichnet, dass** die Aufnahmeeinrichtung eine Kamera (3) mit steuerbarer Belichtungskontrolle, insbesondere eine CCD-Kamera mit steuerbarer Integrationszeit des CCD-Elementes und/oder steuerbarer Verschlusszeit aufweist, und dass die Auswerteinrichtung zur Abgabe eines Steuersignales (20) für die Aufnahmeeinrichtung ausgestaltet ist.

14. Vorrichtung nach einem der Ansprüche 9 bis 13, **dadurch gekennzeichnet, dass** die Einrichtung zur Linienmustererzeugung einen Linienprojektor mit einem Steuereingang für die Lichtintensität der Lichtquelle aufweist, und dass die Auswerteinrichtung zur Abgabe eines Steuersignales für die Intensität des Linienprojektors ausgestaltet ist.

## Claims

1. Method of tracking edges prior to welding and/or for checking edges and welded seams respectively after welding when welding together metal sheets (6, 7) along a common edge (13), in which light in the form of a line pattern, having a plurality of lines (5) running across the edge, is projected on to the sheets (6, 7) and the image of the line pattern recorded by a camera (3) is evaluated, **characterized in that** the lines (5) of the line pattern are projected with light intensities which differ from one another.

2. Method according to Claim 1, **characterized in that** the lines have light intensities in the range between 100% down to 5%.

3. Method according to Claim 1 or 2, **characterized in that,** in addition, lines having the same intensity are projected.

4. Method according to Claim 3, **characterized in that** five lines are projected, one line having an intensity of 100%, two lines having an intensity of 50% and two lines having an intensity of 25%.

5. Method according to Claim 4, **characterized in that** the five lines are produced by a diffraction grating, the line of the zeroth diffraction order lying in the middle having 100% intensity, the lines of the 1^{st} diffraction order lying on either side of it having 50% intensity and the outer lines of the 2^{nd} diffraction order having 25% intensity.

6. Method according to one of Claims 1 to 5, **characterized in that** an evaluation unit (14) is provided for the evaluation, said evaluation unit (14) including an adjustable variable exposure control, and **in that,** during the evaluation of each image, it is determined whether the exposure is to be altered for the next image, and **in that** a control signal is transmitted to the camera for influencing the exposure.

7. Method according to Claim 6, **characterized in that** a CCD camera is used, and **in that** the integration period of the CCD element or the shutter speed of the camera shutter is altered for controlling the exposure, in which case it is preferably always integrated over a constant, selectable edge or seam length.

8. Method according to one of Claims 1 to 7, **characterized in that** the projector for the lines can be controlled as to its light intensity, and **in that**, during the evaluation of each image, it is assessed as to whether the brightness of the lines is to be altered for the next image and, if so, a control signal is transmitted to the projector for influencing the intensity.

9. Apparatus for tracking edges prior to welding and/or for checking edges and welded seams respectively after welding when welding together metal sheets (6, 7) along a common edge (13), said apparatus comprising a device (2) for producing a line pattern having a plurality of lines of light running across the edge, recording equipment (3) for recording an image of the line pattern, and an evaluation unit (14) for evaluating the image, **characterized in that** the device (2) for producing the line pattern is designed to produce a line pattern with lines of different intensities, and the evaluation unit (14) is designed to select lines based on the brightness of the scattered or reflected radiation.

10. Apparatus according to Claim 9, **characterized in that** the device for producing the line pattern comprises a laser light source and a diffraction grating.

11. Apparatus according to Claim 10, **characterized in that** the device is designed to produce five diffraction lines, the diffraction line of the zeroth order having an intensity of 100%, the diffraction lines of the 1^{st} order having an intensity of approximately 50% and the diffraction lines of the 2^{nd} order having an intensity of approximately 25%.

12. Apparatus according to Claim 9, **characterized in that** the recording equipment comprises at least one CCD camera.

13. Apparatus according to one of Claims 9 to 12, **characterized in that** the recording equipment comprises a camera (3) with adjustable exposure control, in particular a CCD camera with controllable integration period of the CCD element and/or controllable shutter speed, and **in that** the evaluation unit is designed to transmit a control signal (20) in respect of the recording equipment.

14. Apparatus according to one of Claims 9 to 13, **characterized in that** the device for producing the line pattern comprises a line projector with a control input for the light intensity of the light source, and **in that** the evaluation unit is designed to transmit a control signal in respect of the intensity of the line projector.

## Revendications

1. Procédé pour déterminer le contour d'un bord avant le soudage et/ou pour vérifier ledit bord ou encore la soudure après le soudage, lors de l'assemblage par soudage de tôles (6, 7) le long d'un bord commun (13), de la lumière sous la forme d'un modèle de lignes comportant plusieurs lignes (5) qui s'étendent transversalement au-dessus dudit bord étant projetée sur les tôles (6, 7), et l'image du modèle de lignes enregistrée par une caméra (3) étant interprétée, **caractérisé en ce que** les lignes (5) du modèle de lignes sont projetées avec des intensités lumineuses respectives différentes.

2. Procédé selon la revendication 1, **caractérisé en ce que** les lignes présentent des intensités lumineuses dans la plage de 100% à 5%.

3. Procédé selon la revendication 1 ou 2, **caractérisé en ce qu'**on projette en plus des lignes de même intensité.

4. Procédé selon la revendication 3, **caractérisé en ce qu'**on projette cinq lignes, une ligne présentant une intensité de 100%, deux lignes une intensité de 50% et deux lignes une intensité de 25%.

5. Procédé selon la revendication 4, **caractérisé en ce que** les cinq lignes sont produites par un réseau de diffraction, la ligne située au milieu, d'ordre zéro de diffraction, présentant une intensité de diffraction de 100%, les lignes situées de part et d'autre de cette dernière, de premier ordre de diffraction, présentant une intensité de 50%, et les lignes extérieures, de deuxième ordre de diffraction, présentant une intensité de 25%.

6. Procédé selon l'une des revendications 1 à 5, **caractérisé en ce qu'**il est prévu pour l'interprétation une unité d'interprétation (14) qui présente un contrôle d'exposition variable asservissable, et **en ce que**, lors de l'interprétation d'une image, on détermine chaque fois s'il faut modifier l'exposition pour l'image suivante, et **en ce qu'**un signal de commande est délivré à la caméra pour agir sur l'exposition.

7. Procédé selon la revendication 6, **caractérisé en ce qu'**on utilise une caméra à transfert de charge (DTC), et **en ce que**, pour le contrôle de l'exposition, on modifie le temps d'intégration de l'élément DTC ou la vitesse d'obturation de l'obturateur de la caméra, en effectuant de préférence chaque fois l'intégration sur une longueur de bord ou de soudure constante, sélectionnable.

8. Procédé selon l'une des revendications 1 à 7, **caractérisé en ce que** l'intensité lumineuse du projecteur pour les lignes peut être commandée, et **en ce que**, lors de l'interprétation d'une image, on détermine chaque fois si la luminosité des lignes doit être modifiée pour l'image suivante, et **en ce que**, dans l'affirmative, un signal de commande est délivré au projecteur pour agir sur l'intensité.

9. Dispositif pour déterminer le contour d'un bord avant le soudage et/ou pour vérifier ledit bord ou encore la soudure après le soudage, lors de l'assemblage par soudage de tôles (6, 7) le long d'un bord commun (13), comprenant un appareil (2) pour produire un modèle de lignes comportant plusieurs lignes de lumière (5) qui s'étendent transversalement au-dessus dudit bord, un appareil de prise de vue (3) pour enregistrer une image du modèle de lignes, et un équipement d'interprétation (14) pour interpréter l'image, **caractérisé en ce que** l'appareil (2) pour produire le modèle de lignes est conçu pour produire un modèle de lignes comportant des lignes d'intensités différentes, et l'équipement d'interprétation (14) est conçu pour sélectionner des lignes sur la base de la luminosité du rayonnement dispersé ou réfléchi.

10. Dispositif selon la revendication 9, **caractérisé en ce que** l'appareil pour produire le modèle de lignes comprend une source de lumière laser et un réseau de diffraction.

11. Dispositif selon la revendication 10, **caractérisé en ce que** l'appareil est conçu pour produire cinq lignes de diffraction, la ligne de diffraction d'ordre zéro présentant une intensité de 100%, les lignes de diffraction de premier ordre une intensité d'environ 50%, et les lignes de diffraction de deuxième ordre une intensité d'environ 25%.

12. Dispositif selon la revendication 9, **caractérisé en ce que** l'appareil de prise de vue présente au moins une caméra à transfert de charge (DTC).

13. Dispositif selon l'une des revendications 9 à 12, **caractérisé en ce que** l'appareil de prise de vue présente une améra (3) à contrôle d'exposition asservissable, notamment une caméra à transfert de charge (DTC) à temps d'intégration asservissable de l'élément DTC et/ou à vitesse d'obturation asservissable, et **en ce que** l'équipement d'interprétation est conçu pour délivrer un signal de commande (20) pour l'appareil de prise de vue.

14. Dispositif selon l'une des revendications 9 à 13, **caractérisé en ce que** l'appareil pour produire le modèle de lignes est un projecteur de lignes doté d'une entrée de commande pour l'intensité lumineuse de la source lumineuse, et **en ce que** l'équipement d'interprétation est conçu pour délivrer un signal de commande pour l'intensité du projecteur de lignes.
